# EUROPEAN PATENT APPLICATION

(11) **EP 4 674 682 A1**
(43) Date of publication of application: **07.01.2026**
(21) Application number: 25186532.5
(22) Date of filing: 01.07.2025
(51) Int. Cl.: B60N 2/58

(54) **TRIM ATTACHMENT**

(30) Priority: 01.07.2024 US 202463666416 P
(71) Applicant: Adient US LLC, Plymouth, MI 48170 (US)
(72) Inventor: Brykalski, Michael Julius, South Lyon, 48178 (US); Citron, Carlo G., Lakeshore, N8L 0W6 (CA); Butuza, Carmen, Brighton, 48114 (US)
(74) Representative: Liedtke & Partner Patentanwälte

(57) **Abstract**

A trim attachment may have a trim piece having an inner surface and an opposite, outermost seating surface. The trim attachment may also have a carrier strip. The trim attachment may also have at least one hidden stitch extending through the carrier strip and the inner surface of trim piece to connect the carrier strip to the trim piece.

## Description

### Field

A trim attachment that is used to secure trim on a seat is described and depicted.

### Background

Consumers are demanding comfortable and attractive seating surfaces for seats. They do not want to see or feel structures or devices located under the seating surfaces associated with seat trim or features. As such seat manufacturers are tasked with finding structures and methods of manufacturing that are time and cost efficient and which provide an attractive seat surface today's consumer demand.

### Summary

A trim attachment may have a trim piece having an inner surface and an opposite, outermost seating surface, a carrier strip having a first portion, a second portion and a middle portion between the first and second portions, wherein the first and second portions may be connected to the trim piece, or a trim backing material, and at least one hidden stitch may extend through the carrier strip and the inner surface of trim piece to connect the carrier strip to the trim piece.

The trim piece, or the trim backing material attached to the trim piece, may define a thickness between the inner surface and the outermost seating surface into which the at least one hidden stitch extends.

The middle portion of the carrier strip may comprise a connecting element.

The connecting element may comprise a non-woven fabric.

The middle portion of the connecting element may be comprised of a duon attached to a foam pad or stationary seat structure.

The at least one hidden stitch may comprise a first portion that extends along an outside surface of the carrier strip and a second portion that may extend within the carrier strip.

The second portion may extend into the carrier strip at an acute angle measured from horizontal.

The at least one hidden stitch may terminate and does not extend through to the outermost seating surface.

The at least one hidden stitch may comprise first and second hidden stitches extending along the carrier strip, wherein each first and second hidden stitches may comprise a first portion and a second portion, wherein the respective second portions may connect with one another within the trim piece or within the trim backing material.

The second portions may form a V-shape within the trim piece or within the trim backing material.

The first and second hidden stitches may distribute a force on the trim piece from the carrier strip.

The at least one hidden stitch may comprise first and second hidden stitches, wherein each first and second hidden stitches may comprise a first portion and a second portion, wherein one second portion may form a loop that is captured within a loop of the other second portion.

The at least one hidden stitch may comprise first and second hidden stitches, wherein each first and second hidden stitches may comprise a first portion that extends along an outer surface of the carrier strip, wherein respective first portions may be laterally parallel but longitudinally offset from one another.

A trim attachment may comprise a trim layer having a first side and a second side, a trim backing material having a first side and a second side, wherein the first side of the trim backing material may be connected to the second side of the trim layer, a carrier strip that may have a first side and a second side, wherein the first side of the carrier strip may be adjacent to the second side of the trim backing material, and a hidden stitch that may extend through the second and first sides of the carrier strip and into the second side of the trim backing material and terminating in the trim backing material.

The first side of the trim backing material may be bonded to the second side of the trim layer, wherein the trim backing material may be comprised of a plurality of randomly distributed fibers.

The carrier strip may comprise first and second portions bounding a third portion, wherein the third portion may form a T-shape or Y-shape with the first and second portions.

The carrier strip may comprise a first portion, a second portion and a third portion, wherein the first and second portions each comprise inner and outer legs, wherein each inner leg may be connected to the third portion.

The outer legs of the first and second portions may be sewn to the trim backing material.

The third portion may extend into a groove formed in a foam layer.

The third portion may comprise a bead adapted to be secured to a hog ring or a bead.

According to an exemplary embodiment as shown schematically in the figures, a trim cover for a vehicle seat may comprise an outer trim layer; an inner trim layer adjacent the outer trim layer; and a seat trim cover attachment device comprising a connector and an attachment configured to attach the inner trim layer to at least one of (a) a seat cushion; (b) a seat pad; (c) a seat structure. The connector may comprise a left leg and a right leg. At least one of (a) the left leg and/or (b) the right leg may be sewn to the inner trim layer. The left leg may be spaced away from the right leg along the inner trim layer. The trim cover may comprise stitching configured to join the attachment to the inner trim layer. The stitching may terminate in the inner trim layer spaced away from the outer trim layer. The stitching may extend through a lower surface of the inner trim layer and into the inner trim layer at an acute angle relative to the lower surface. The stitching may comprise a left stitch and a right stitch configured to sew at least one of (a) the left leg and/or (b) the right leg to the inner trim layer. The left stitch may entwine with the right stitch in the inner trim layer. The left stitch and the right stitch may form a V-shape. The trim cover may comprise a first stitch pattern to sew the left leg to the inner trim layer and a second stitch pattern to sew the right leg to the inner trim layer. The second stitch pattern may be spaced away from the first stitch pattern. The first stitch pattern and the second stitch pattern may be configured to provide a distributed force to pull the inner trim layer along a surface of the inner trim layer. The first stitch pattern and the second stitch pattern may be configured to provide a generally distributed force to pull the inner trim layer away from the outer trim layer. The trim cover may comprise stitching configured to provide a lateral force to the inner trim layer and a vertical force to the inner trim layer. The seat trim cover attachment device may be sewn to the inner trim layer in a first location to the left of the attachment and a second location to the right of the attachment to provide a generally smooth outer surface of the outer trim layer. The first location may be spaced at least 10mm away from the second location. The right leg and the left leg may be sewn to the inner trim layer to provide a V-shaped connector. The right leg and the left leg may meet at the attachment. The right leg may be sewn to the left leg away from the attachment to provide an extension suspended from the connector. The right leg may be sewn to the left leg away from the attachment to form a Y-shape. The connector may comprise a non-woven fabric coupled to the attachment. The seat trim cover attachment device may comprise a T-shape. The connector may comprise an extension sewn to a base; the extension may comprise the attachment; the base may comprise the right leg and the left leg. The extension may be suspended from the base. The extension may be sewn to a folded portion of the base. The extension may comprise a non-woven fabric; the base may comprise a polyester sheet. The extension and the base may form a Y-shape. The attachment may comprise a plastic bead configured for assembly to a mating part with a hog ring. The left leg may be sewn to the inner trim layer and the right leg may be sewn as part of a joint of two patterns of the outer trim layer.

### Description of the drawings

- Fig. 1: is a schematic, perspective view of a vehicle;
- Fig. 2: is a plan view in section of the vehicle of Fig. 2;
- Fig. 3: is a schematic, perspective view of a seat within the vehicle;
- Fig. 4: is a schematic plan view of a seat trim cover attachment device;
- Fig. 5: is a schematic side view of the seat trim cover attachment device;
- Fig. 6: is a schematic perspective view of a trim backing material;
- Fig. 7: is a schematic plan view of a seat trim cover attachment device;
- Fig. 8: is a schematic plan view of a seat trim cover attachment device;
- Fig. 9: is a schematic plan view of a seat trim cover attachment device;
- Fig. 10: is a schematic plan view of a seat trim cover attachment device;
- Fig. 11: is a schematic partial cut away plan view of the seat of Fig. 3 in a first and second condition;
- Fig. 12: is a detail from Fig. 11 schematically depicting interior components of the seat in a first and a second condition;
- Fig. 13: schematically depicts a component from Fig. 12 in a first and a second condition;
- Fig. 14A: is a schematic perspective of a seat trim cover attachment device, a trim layer and a trim backing material;
- Fig. 14B: is a schematic perspective view of a portion of the device from Fig. 14A;
- Fig. 14C: is a schematic side view of a portion of the device from Fig. 14A;
- Fig. 14D: is a schematic partial cutaway side view of a seat trim cover attachment device, a trim layer and a trim backing material;
- Fig. 14E: is a schematic cut-away side view detail from Fig. 14D;
- Fig. 15A: is a schematic cut-away end view of a seat trim cover attachment device, a trim layer and a cushion material; and
- Fig. 15B: is a schematic cut-away end view of a seat trim cover attachment device, a trim layer and a cushion material.

### Detailed description

It is to be understood that the presently disclosed subject matter may assume various alternative orientations and step sequences, except where expressly specified to the contrary. It is also to be understood that the presently disclosed subject matter described in the following specification is simply an exemplary embodiment. Hence, specific dimensions, directions or other physical characteristics relating to the embodiments disclosed are not to be considered as limiting, unless expressly stated otherwise. Regarding directions, directions such as upper and lower and inside and outside shall not be limiting and are a function of the manufacturing and/or installation state of the product. For example, in one manufacturing or installation condition a surface may be an inside surface while in another condition the same surface may be an outside surface.

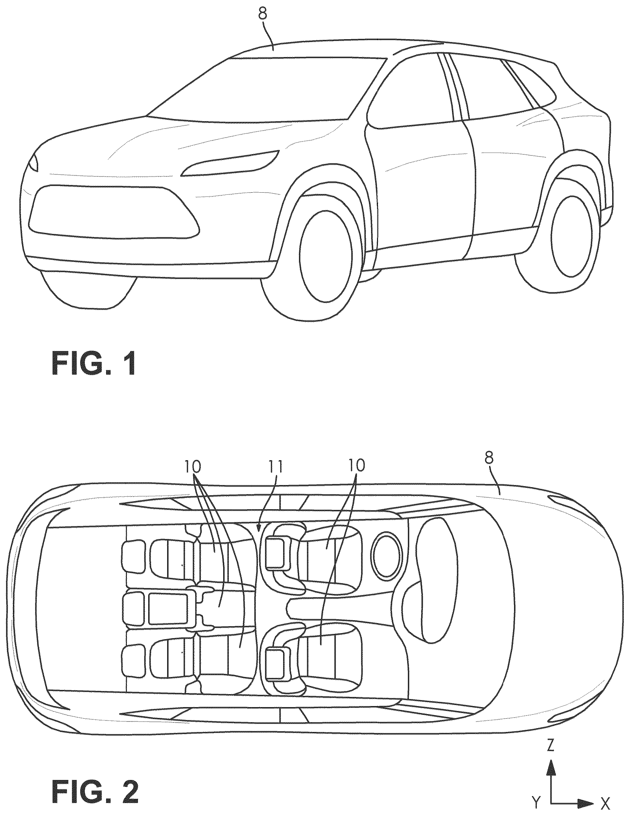

Figs. 1-2 schematically depict a vehicle 8, such as a motor vehicle. While one vehicle 8 is depicted, vehicles of other shapes, sizes and configurations may be used. Seats 10 may be located in an interior 11 of the vehicle 8. Here also, while a certain number, type, location and orientation of seats 10 are schematically depicted other variations are permissible including seats 10 turned in different directions.

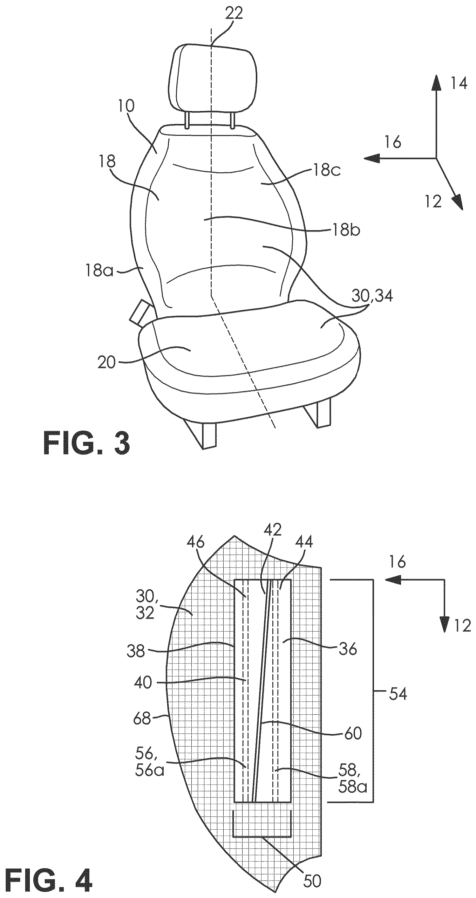

Turning now to Fig. 3, one embodiment of a vehicle seat 10 oriented along a set of X-Y-Z coordinates is shown. The X-direction may be such as in a longitudinal direction 12. The longitudinal direction 12 may be such as the primary direction of travel (e.g., forward and reverse) of the vehicle in which the seat 10 is located. The Y-direction may be transverse the X-direction and may extend in the vertical direction 14 such as from floor to ceiling in the exemplary vehicle. The Z-direction may be transverse both the X and the Y directions. The Z-direction may be such as in a lateral direction 16, from one side of the vehicle to the other side of the vehicle.

The vehicle seat 10 may comprise a backrest portion 18 with a first backrest portion 18a, a second backrest portion 18b, and a third backrest portion 18c, all of which may generally extend laterally and vertically. The second backrest portion 18b may be located between the first and third backrest portions 18a, 18c. The seat 10 may also comprise a seat portion 20, attached to the backrest portion 18, generally extending in the longitudinal direction 12. The seat 10 may have a vertically extending centerline 22 that may laterally bisect the vehicle seat 10 in half. The seat 10 may be vertically symmetrical about the centerline 22, but symmetry is not required.

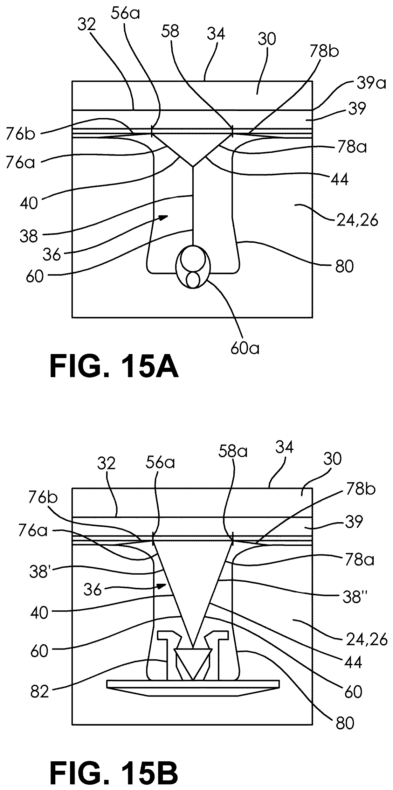

Both the backrest portion 18 and the seat portion 20 may have a frame. The frame may connect the backrest portion 18 and seat portion 20, provide support for other features of the seat 10 and/or permit the seat 10 to be connected to the vehicle 8. As schematically shown in at least Figs. 15A, and 15B, a cushion material 24 may be located over the frame to provide shape to the backrest portion 18 and seat portion 20 as well as provide occupant comfort. The cushion material 24 may be such as one or more layers of foam 26, but other materials may be used as well.

In some embodiments one or more trim layers 28 may be located at least partially over the cushion material 24 and/or frame. The trim layers 28 may be constructed of one or more trim pieces 30 that may be connected together. The trim layers 28 and/or pieces 30 may be constructed of one or more types of materials including man-made and/or natural materials. The following discussion will simply use trim 30 to refer to both trim layers 28 and trim pieces 30.

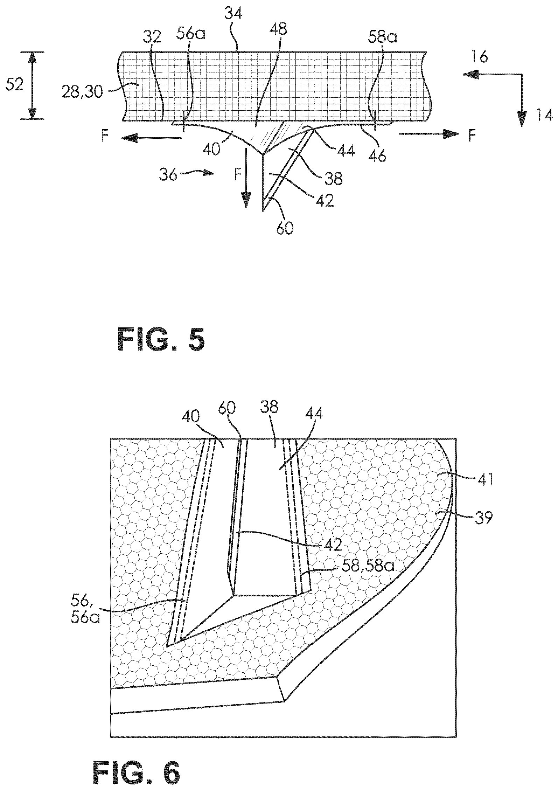

As may be appreciated from at least Figs. 5, 15A, 15B the trim 30 may have an inside surface 32, also known as a B-side, that faces the cushion material 24 and an opposite outside surface 34, also known as an A-side, which may be an outermost seating surface that is generally visible to an occupant (not depicted) looking at, or located in, the seat 10. A trim attachment 36 may be connected to, such as bound, to the inside surface 32 of the trim 30 that together with other features functions to pull the trim 30 taut and create a seamless, aesthetically pleasing appearance.

With additional reference to Fig. 4, one embodiment of the trim attachment 36 that is connected to the seat trim 30 is schematically depicted. The trim attachment 36 may comprise a carrier strip 38 that may be made of a low or no stretch material, such as polyester sheeting. In one embodiment, the carrier strip 38 may stretch between approximately 0% and 10% of its original length 54 when subjected to a pulling force typically experienced in a seat application. The carrier strip 38 may be one-piece, unitary, and integrally formed or it may be comprised of two or more pieces of the same or different materials (as described above) directly connected together.

As shown in Fig. 4, the carrier strip 38 may have a generally rectangular shape, and a first portion 40, a middle portion 42, and a second portion 44. While a rectangular shape is mentioned, other shapes may be used. The carrier strip 38 may have an upper surface 46 and a lower surface 48.

The middle portion 42 may be located between the first portion 40 and second portion 44 and may make up between approximately 5% and approximately 25% of a width 50 of the carrier strip 38. The remaining approximately 75%-95% may be split equally or unequally between the first portion 40 and second portion 44 of the carrier strip 38. The carrier strip 38 may be between approximately 5 millimeters to 200 millimeters wide and may have a thickness 52 of approximately 1.5mm (such as schematically depicted in Fig. 5), with a length 54 that is variable, depending on the needs of the application.

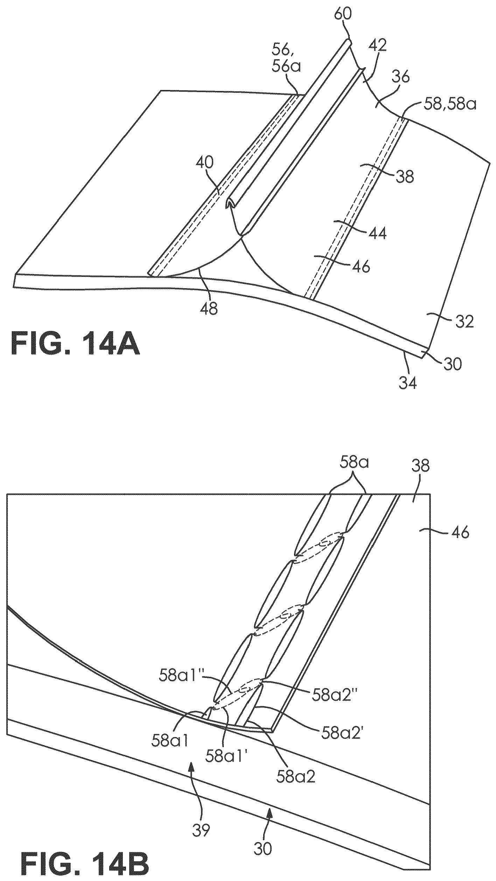

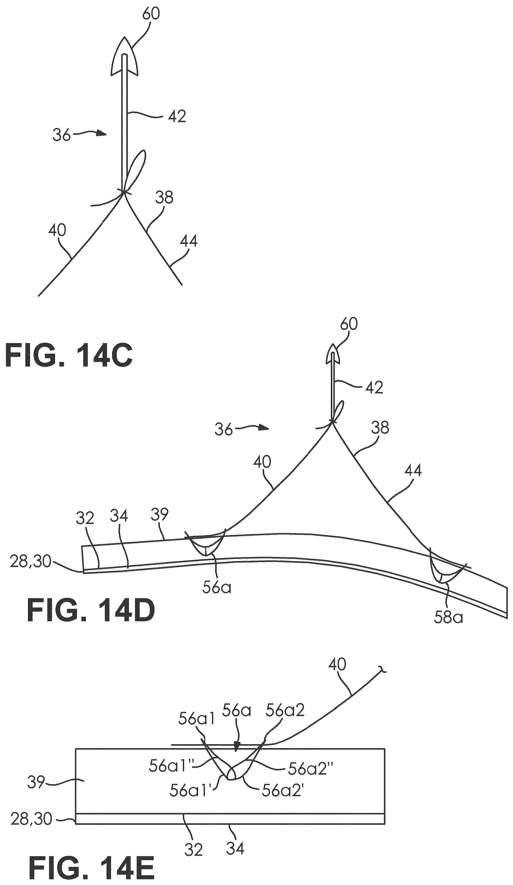

The carrier strip 38 may be attached to the inside surface 32 of the seat trim 30, and/or the carrier strip 38 may be attached to a trim backing material 39, at the first portion 40 with a plurality of first portion stitches 56 and the second portion 44 with a plurality of second portion stitches 58. The first portion stitches 56 and the second portion stitches 58 may continuously or non-continuously extend a portion or the entire length 54 of the carrier strip 38. The stitches 56, 58 may extend in a generally linear manner or a nonlinear manner. The stitches 56, 58 may each be comprised of two rows of stitches 56a1, 56a2, 58a1, 58a2, depicted in Fig. 14B, where the individual rows may extend parallel one another.

Each of the stitches 56, 58 may be such lock and/or hidden stitches of at least one thread from a single pass of sewing needle during a sewing step. The stitches 56, 58 may extend at least partially into the seat trim 30, the carrier strip 38 and/or the trim backing material 39. As schematically shown in at least Figs.5 and 14A-D, hidden stitches 56a, 58a may extend through the upper and/or lower surfaces 46, 48 of the carrier strip 38.

The term "hidden stitch" refers to a stitch that does not protrude through or extend to the outside surface 34 of the trim 30, thus making it hidden from view from the outside surface 34 of the trim 30. A series of hidden stitches may extend through the carrier strip 38 and the trim backing material 39 and/or the trim 30. Fig. 14B schematically depicts the upper surface 46 of the carrier strip 38 with at least the first portion hidden stitches 58a. Fig. 14B also schematically depicts two rows of hidden stitches 58a1 and 58a2 extending through the carrier strip 38 and into the trim backing material 39. The stitches 58a1, 58a2 do not extend through the outer surface 34 of the trim; they may extend into the trim 30. Each of the stitches 58a1, 58a2 may be one-piece, unitary and integrally formed. Each of the stitches 58a1, 58a2 may be comprised of a first portion 58a1', 58a1" and a second portion 58a2', 58a2". The first portions 58a1', 58a2' may extend along the upper surface 46, which may be an outside surface, of the carrier strip 38. The first portions 58a1', 58a2' may extend laterally parallel but longitudinally offset from one another. The second portions 58a1", 58a2" may extend within the trim backing material 39 and/or the trim 30. The second portions 58a1", 58a2" may extend at an acute angle with respect to horizontal and or the first portions 58a1', 58a2'. The second portions 58a1", 58a2" may form a V-shape within the trim piece 30 or within the trim backing material 39.

As schematically depicted in Figs. 14B and 14E, the second portions 58a1", 58a2" may be connected together. The connection may be within the trim backing material 39 and/or the trim 30. Preferably, the connection does not extend through the trim 30 such as through the outside surface 34. The connection may be that a loop of one of the second portions 58a1" or 58a2" is looped or intersected with the other of the second portions 58a1", 58a2". The connection ensures the stitches 58a1, 58a2 are secured to the trim backing material 39 and/or the trim 30 and one another so as to secure the carrier strip 38 to the trim backing material 39 and/or the trim 30 in a way that prevents the stitches from being visible and/or extending through the trim 30.

The trim backing material 39 may be directly attached to the trim inside surface 32. The trim backing material 39 may extend in whole or in part on the trim 30; it may extend at least in part along the carrier strip 38.

The trim backing material 39 may be a woven or non-woven, fine or coarse, natural or man-made fabric that is connected to the trim 30. The trim backing material 39 may line the trim 30 in whole or in part.

The trim backing material 39 may be comprised of many randomly oriented fibers of different sizes and shapes. This nature of the trim backing material 39 may let the stitches 56a, 58a hold or fix into the trim backing material 39 as the random fibers may function to entangle the stitches 56a, 58a therein and hold them fast. The trim backing material 39 may be part of the trim 30 such that it is one piece, unitary and integrally formed.

The trim backing material 39 may comprise a web or pattern 41 on a surface of the trim backing material 39 as schematically shown in Fig. 6. The web 41 may comprise a repeating set of geometric shapes connected at their peripheries and with spaces between them. The fibers of the trim backing material 39 and web 41 may also assist in retaining the stitches 56a, 58a within the trim backing material 39.

A connecting element 60 may be part of, or connected to, the carrier strip 38. When the connecting element 60 is connected to the carrier strip 38 it may be attached to the middle portion 42 of the carrier strip 38, such as to the upper surface 46 of the carrier strip 38. The attachment may be such as through one or more stitches, adhesives, welding and/or mechanical fasteners. The connecting element 60 may be any size or shape, but it may have a generally oval, round, teardrop or arrow cross-sectional shape. The connected element 60 may be a non-woven fabric such as a duon or a beaded duon. The connecting element 60 may extend generally perpendicular and downward from the upper surface 46 of the carrier strip 38 when the carrier strip 38 is in a non-tensioned condition. The connecting element 60 may also extend generally perpendicular and downward from the trim backing material 39 and/or the trim 30. In the non-tensioned condition, the connecting element 60 and the carrier strip 38 may form a general T-shape. The connecting element 60 may span a portion of, or the entire length 54 of, the carrier strip 38.

The connecting element 60 may be attached to a hog ring 60a as schematically shown in Fig. 15A. The hog ring 60a may extend into and/or through the foam layer 26 to connect the seat trim 30 to the cushion material 24 and/or seat frame via the hog ring 60a so that the hog ring 60a can pull the carrier strip 38 in a way that shapes the seat trim 30. In this condition, the connecting element 60, and thus the carrier strip 38, may be in a tensioned state. As such, the connecting element 60 and the carrier strip 38 may form a general Y-shape, as schematically depicted in Fig. 15A. Similarly, the connecting element 60 and the carrier strip 38 may form a general Y-shape when the connecting element 60 is otherwise secured to the trim backing material 39 and/or trim 30, as schematically shown in Figs. 14A and 14D.

The above-described features may function to create a force on the inside surface 32 of the trim 30 that will pull the trim 30 and/or the trim backing material 39 taut, drawing it to the shape of the cushion material 24 or any structures under the trim 30, and create a seamless appearance on the outside surface 34 of the trim 30. The stitches 56a, 58a may a distribute a force on the trim piece from the carrier strip to create a seamless appearance on the outside surface 34 of the trim 30.

The connecting element 60 may also be attached to a seat cushion, a seat pad and/or a seat structure or any stationary seat structure.

The second portion hidden stitches 58a may be located on the carrier strip 38 between approximately 5 millimeters laterally from the connecting element 60, and approximately 24 millimeters laterally from the connecting element 60, between the connecting element 60 and the centerline 22 of the vehicle seat 10. The first hidden stitches 56a may be located on the carrier strip 38 between approximately 5 millimeters laterally from the connecting element 60, and approximately 24 millimeters laterally from the connecting element 60, on the opposite side of the connecting element 60 as the second hidden stitches 56a. In some cases, the first and second hidden stitches 56a, 58a may be located equal distances from the connecting element 60. In other cases, the first and second hidden stitches 56a, 58a may be located at unequal distances from the connecting element 60.

Referring to Figs. 15A and 15B, the trim attachment 36 is shown installed within a trench or groove 80 in a layer of foam 26. The trim inside and outside surfaces 32, 34 are shown above the groove 80. A first surface 39a of the trim backing material 39 is shown directly connected to the trim inside surface 32, such as with an adhesive or the like. First hidden stitches 56a extend through the first portion of the carrier strip 40 and into the trim backing material 39 but not through the trim outside surface 34. Second hidden stitches 58a extend through the second portion of the carrier strip 44 and into the trim backing material 39 but not through the trim outside surface 34.

As schematically shown in Fig. 15A, the first and second portions of the carrier strip 40, 44 may each be comprised of inner and outer legs 76a, 76b, 78a, 78b. The outer legs 78a, 78b, or a transition portion between the inner and outer legs 76a, 76b, 78a, 78b, may receive the stitches 56a, 56b. The inner legs may extend downwardly and inwardly into the groove 80 where they attach to the connecting element 60 located in the groove 80. The stitches 56a, 58a may be laterally spaced from one another, such as at least the lateral width of the groove 80. The position and spacing of the stitches 56a, 58a may distribute the force the stitches 56a, 58a exert on the trim backing material 39 and thus the trim 30 to sure that the stitches 56a, 56b do not leave an indentation or sign on the trim outside surface 34.

Fig. 15B schematically depicts first hidden stitches 56a extending through the first portion of the carrier strip 40 and into the trim backing material 39 but not through the trim outside surface 34. Second hidden stitches 58a extend through the second portion of the carrier strip 44 and into the trim backing material 39 but not through the trim outside surface 34. The first portion and the second portion 40, 44 transition to respective carrier strips 38', 38". The carrier strips 38', 38" may extend to a trim attachment clip 82 that may be located and secured in the base of the groove 80. The carrier strips 38', 38" may be individual carrier strips 38.

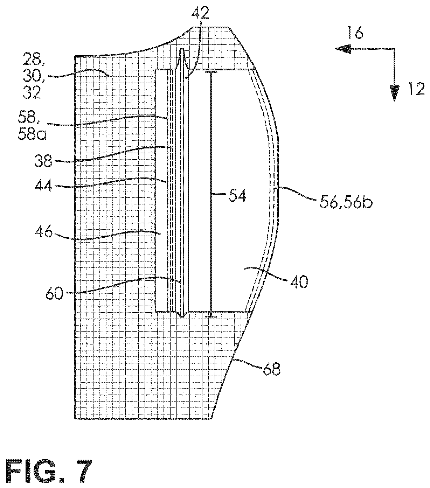

As schematically shown in Fig. 7, the second portion stitches 58 may be second portion hidden stitches 58a, and the first portion stitches 56 may be a join sew 59 along the nearest edge 68 of the cushion material 24. In this embodiment, the carrier strip 38 may be one piece, unitary, and integrally formed, and it may extend to the edge 68 of the cushion material 24 to accommodate the join sew 59. The connecting element 60 may then be located off-center of the carrier strip 38, away from the edge 68 of the cushion material 24. The thickness, width, and sewing dimensions of the carrier strip 38 described in previous embodiments may vary in this embodiment compared to that described above.

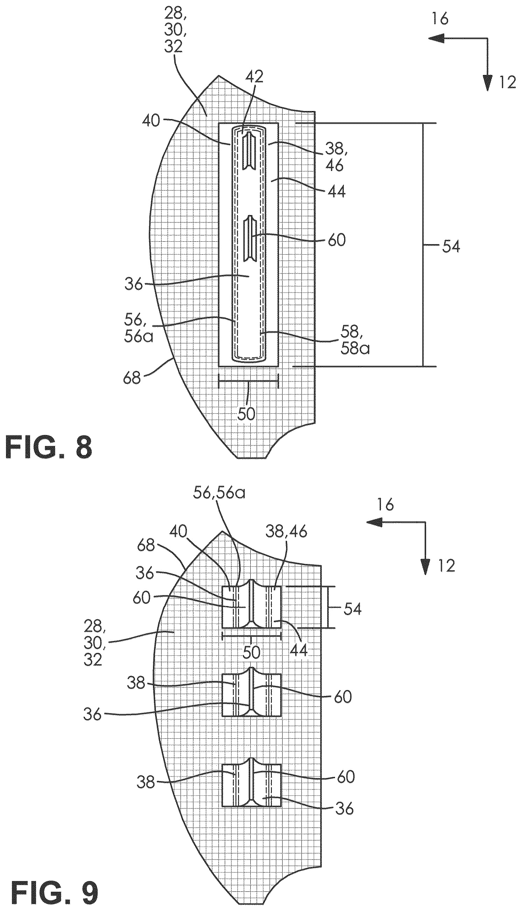

As schematically shown in Fig. 8, there may be multiple, smaller connecting elements 60 equally or unequally spaced along the length 54 of the carrier strip 38. The carrier strip 38 may again be generally rectangular in shape and one-piece, unitary, and integrally formed or it may be comprised of 2 or more pieces. Each carrier strip 38 may have the first portion 40, the middle portion 42, and the second portion 44 as described in earlier embodiments. The carrier strip 38 may be attached to the inside surface 32 of the seat trim 30 and/or the trim backing material 39 by first hidden stitches 56a and second hidden stitches 58a as described previously. This embodiment provides an opportunity for selective placement of the connecting elements 60 along the carrier strip 38 that may facilitate different tensions on the trim 30 at different locations to provide for custom contouring.

As schematically shown in Fig. 9, there may be multiple, smaller carrier strips 38, each being one piece, unitary, and integrally formed, or comprised of two or more pieces, and bound to the inside surface 32 of the trim 30 and/or the trim backing material 39 via hidden stitching 56a, 58a, as previously described. Each carrier strip 38 may have a connecting element 60 that may extend its length 54 in whole or in part. The carrier strips 38 may be vertically aligned on the backrest portion 18 and longitudinally aligned on the seat portion 20 but other orientations may be permissible. This embodiment allows for the selective placement of the carrier strips 38 which will further the goal of providing a seamless appearance on seat/backrest portions 20, 18 with abnormal contours/designs.

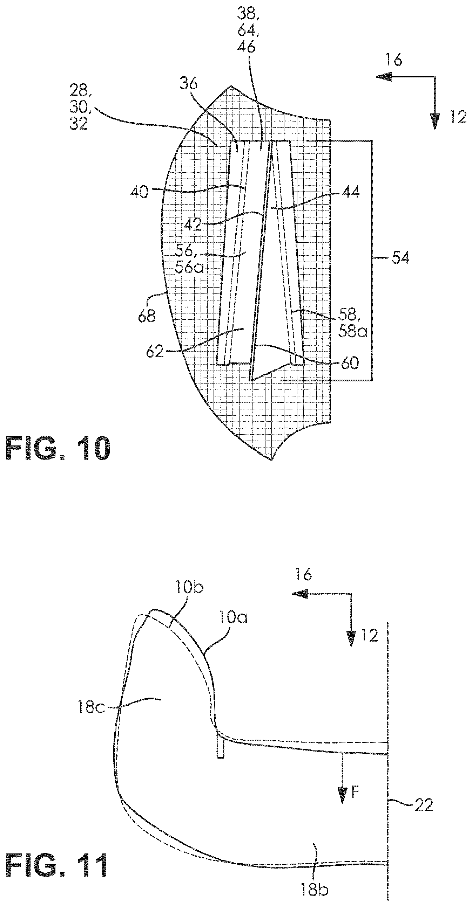

As schematically shown in Fig. 10, the carrier strip 38 may be tapered, forming a generally trapezoidal shape 62. This shape 62 may allow the carrier strip 38 to be wider on wider areas of the trim 30 and/or trim backing material 39 and narrow on narrower areas of the trim 30 and/or trim backing material 39, thus providing additional flexibility and options for locating the carrier strip 38 in uniquely shaped areas of the trim 30 to create a seamless trim appearance on the vehicle seat 10. The trapezoidal carrier strip 64 may be one piece, unitary, and integrally formed, or it may be comprised of 2 or more pieces, and may be attached to the inside surface 32 of the seat trim 30 and/or the trim backing material 39 via a first hidden stitch 56a and a second hidden stitch 58a, where each may be approximately 5-24mm away from the nearest point of the connecting element 60 on their respective sides.

It is also possible for there to be at least three smaller, vertically distal, trapezoidal carrier strips 64 with a connecting element 60 attached at a middle portion 42 of each carrier strip 38 via a middle portion sew 66 at the middle portion 42. The carrier strips 38 may be attached to the inside surface 32 of the seat trim 30 and/or the trim backing material 39 via two hidden stitches each 56a, 58a, as previously discussed. These custom shapes display the adaptability of the design for hard-to-reach spaces or uniquely shaped spaces thus allowing the designer more precision and thus the desired appearance on the outside surface 34 of the trim 30.

Other methods of attachment may be used in place of, or in conjunction with, stitching. For example, adhesives may be employed in a similar way as the hidden stitches 56a, 58a previously described. Further, there may be an adhesive on each side of the connecting element 60 located between approximately 1mm and approximately 30mm from the connecting element 60. The adhesives may be any adhesive material that is strong enough to keep the carrier strip 38 secured to the seat trim 30 while the trim attachment 36 is in a tensioned state. The adhesives may be located between the carrier strip 38 and seat trim 30 throughout the entire length 54 of the carrier strip 38 or only on a shorter portion of the carrier strip 38. In another embodiment, there may be multiple, smaller adhesives between the carrier strip 38 and the seat trim 30. The adhesives may be placed in such a way that allows the trim attachment 36, when in a tensioned position, to create a seamless appearance in the seat trim 30.

The first portion 40 of the carrier strip 38 may be secured to the seat trim 30 via an adhesive, while the second portion 44 of the carrier strip 38 may be secured to the seat trim 30 via a second portion hidden stitch 58a, as previously described. Alternatively, the first portion 40 of the carrier strip 38 may be secured to the seat trim 30 via a first hidden stitch 56a as previously described, while the second portion 44 of the carrier strip may be secured to the seat trim 30 via an adhesive. Varying the way in which the carrier strip 38 is attached to the seat trim 30 may further the goal of creating a seamless appearance in the seat trim 30.

The performance of the design may be appreciated in Fig. 11, wherein a portion of an unoccupied seat 10b is depicted in solid lines and the same portion of the seat 10a in an occupied state is depicted in dashed lines. The seat portion may be such as the second and third backrest portions 18b and 18c, which may be such as the backrest portion and a bolster portion of the seat 10.

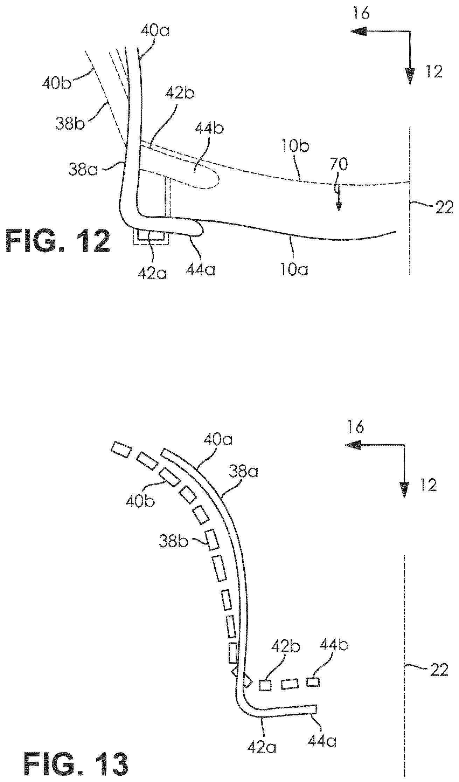

When an occupant enters the seat 10, a force 70 may be applied to the backrest portion 18 in the longitudinal direction 12. As schematically shown in Figs. 11-13, upon the introduction of the force 70, at least the second portion 44b and middle portion 42b of the unoccupied carrier strip 38b may move in the longitudinal direction 12 and become occupied second and middle portions 44a, 42a, respectively. Note that in the figures only one side, such as the second side portion 44a, of the carrier strip 38b is depicted. The carrier strip 38b may have only one of the side portions 40, 44. Even with a single side portion 44, the carrier strip 38b may perform as described and depicted herein. Upon the movement of the middle and second portions 42, 44 of the carrier strip 38a in the longitudinal direction 12, at least the first portion 40b of the unoccupied carrier strip 38b may be pulled in the lateral direction 16 inwardly towards the vertically extending centerline 22 and become an occupied first portion 40a. When pulled, the carrier strip 38a, 38b may stay of substantially constant length 54, which may allow the seat trim 30 to be pulled in the same direction as the carrier strip 38a, which in turn may pull on the seat cushion 24. As shown in Fig. 8, when the seat cushion 24 is pulled, the first side backrest portion 18a and third side backrest portion 18c may maintain their original shape and pivot between approximately 3 degrees and approximately 45 degrees in the lateral direction 16 towards the vertically extending centerline 22. Thus, when the seat 10 is occupied, the backrest portion 18 may have moved to partially surround the occupant. By way of example, the third side backrest portion 18c pivots at least partially toward an occupant in the seat 10.

In accordance with the provisions of the patent statutes, the present device has been described in what is considered to represent its preferred embodiments. However, it should be noted that the device can be practiced otherwise than as specifically illustrated and described without departing from its spirit or scope.

### List of References

- 8: Vehicle
- 10: Seat
- 10a: Occupied Seat
- 10b: Unoccupied Seat
- 11: Interior
- 12: Longitudinal Direction
- 14: Vertical Direction
- 16: Lateral Direction
- 18: Backrest Portion
- 18a: First Backrest Portion
- 18b: Second Backrest Portion
- 18c: Third Backrest Portion
- 20: Seat Portion
- 22: Vertically Extending Centerline
- 24: Cushion Material
- 26: Foam
- 28: Trim Layer
- 30: Trim (Pieces)
- 32: Trim Inside Surface
- 34: Trim Outside Surface
- 36: Trim Attachment
- 38: Carrier Strip
- 38': Carrier Strip Section
- 38": Carrier Strip Section
- 38a: Carrier Strip - Occupied Position
- 38b: Carrier Strip - Unoccupied Position
- 39: Trim Backing Material
- 39a: First Surface Trim Backing Material
- 40: First Portion Carrier Strip
- 40a: First Portion Carrier Strip - Occupied Position
- 40b: First Portion Carrier Strip - Unoccupied Position
- 41: Web Pattern
- 42: Middle Portion Carrier Strip
- 42a: Middle Portion Carrier Strip - Occupied Position
- 42b: Middle Portion Carrier Strip - Unoccupied Position
- 44: Second Portion Carrier Strip
- 44a: Second Portion Carrier Strip - Occupied Position
- 44b: Second Portion Carrier Strip - Unoccupied Position
- 46: Upper Surface Carrier Strip
- 48: Lower Surface Carrier Strip
- 50: Carrier Strip Width
- 52: Carrier Strip Thickness
- 54: Carrier Strip Length
- 56: First Portion Stitches
- 56a: First Hidden Stitches
- 56b: Join Sew
- 56a1: First row - 1^{st} Portion Stitch
- 56a2: Second row - 1^{st} Portion Stitch
- 58: Second Portion Stitches
- 58a: Second Hidden Stitches
- 58a1: First row - 2^{nd} Portion Stitch
- 58a2: Second Row - 2^{nd} Portion Stitch
- 58a1': 1^{st} Portion of Stitch
- 58a1": 2^{nd} Portion of Stitch
- 58a2': 1^{st} Portion of Stitch
- 58a2": 2^{nd} Portion of Stitch
- 60: Connecting Element
- 60a: Hog Ring
- 62: Trapezoidal Shape
- 64: Trapezoidal Carrier Strip
- 66: Middle Portion Sew
- 68: Cushion Material Edge
- 70: Force
- 76a: Inner Leg of 1^{st} Portion of the Carrier Strip
- 76b: Outer Leg of the 1^{st} Portion of the Carrier Strip
- 78a: Inner Leg of the 2^{nd} Portion of the Carrier Strip
- 78b: Outer Leg of the 2^{nd} Portion of the Carrier Strip
- 80: Groove in Foam
- 82: Trim Attachment Clip

## Claims

1. A trim attachment (36), comprising:
a trim piece (30) having an inner surface (32) and an opposite, outermost seating surface (34),
a carrier strip (38) having a first portion (40), a second portion (44) and a middle portion (42) between the first and second portions (40, 44), wherein the first and second portions (40, 44) are connected to the trim piece (30), or a trim backing material (39), and
at least one hidden stitch (56, 58) extending through the carrier strip (38) and the inner surface (32) of the trim piece (30) to connect the carrier strip (38) to the trim piece (30).

2. The trim attachment (36) of claim 1, wherein the trim piece (30), or the trim backing material attached to the trim piece (30), defines a thickness between the inner surface (32) and the outermost seating surface (34) into which the at least one hidden stitch (56, 58) extends.

3. The trim attachment (36) of claim 1 or 2, wherein the middle portion (42) of the carrier strip (38) is comprised of a non-woven fabric attached to a foam pad or stationary seat structure.

4. The trim attachment (36) according to one of the preceding claims, wherein the at least one hidden stitch (56, 58) comprises a first portion (40) that extends along an outside surface (34) of the carrier strip (38) and a second portion (44) that extends within the carrier strip (38) at an acute angle measured from horizontal, wherein the at least one hidden stitch (56, 58) terminates and does not extend through to the outermost seating surface (34).

5. The trim attachment (36) according to one of the preceding claims, wherein the at least one hidden stitch (56, 58) comprises first and second hidden stitches (56, 58) extending along the carrier strip (38), wherein each first and second hidden stitches (56, 58) comprise a first portion (40) and a second portion (44), wherein the respective second portions (44) connect with one another within the trim piece (30) or within the trim backing material.

6. The trim attachment (36) of claim 5, wherein the second portions (44) form a V-shape within the trim piece (30) or within the trim backing material.

7. The trim attachment (36) of claim 5 or 6, wherein the first and second hidden stitches (56, 58) distribute a force on the trim piece (30) from the carrier strip (38).

8. The trim attachment (36) according to one of the preceding claims, wherein the at least one hidden stitch (56, 58) comprises first and second hidden stitches (56, 58), wherein each first and second hidden stitches (56, 58) comprise a first portion (40) and a second portion (44), wherein one second portion (44) forms a loop that is captured within a loop of the other second portion (44).

9. The trim attachment (36) according to one of the preceding claims, wherein the first, second and middle portions (40, 44, 42) form a T-shape or a Y-shape.

10. The trim attachment (36) according to one of the preceding claims, wherein the middle portion (42) comprises a bead adapted to be secured to a hog ring.

11. The trim attachment (36) according to one of the preceding claims, wherein the at least one hidden stitch (56, 58) comprises first and second hidden stitches (56, 58), wherein each first and second hidden stitches (56, 58) comprise a first portion (40) that extends along an outside surface (34) of the carrier strip (38), wherein respective first portions (40) are laterally parallel but longitudinally offset from one another.

12. The trim attachment (36) according to one of the preceding claims, wherein the first and second portions (40, 44) of the carrier strip (38) each comprise inner and outer legs, wherein each inner leg is connected to the middle portion (42).

13. The trim attachment (36) of claim 12, wherein the outer legs of the first and second portions (40, 44) are sewn to the trim backing material.

14. The trim attachment (36) according to one of the preceding claims, wherein the middle portion (42) extends into a groove formed in a foam layer.

15. The trim attachment (36) according to one of the preceding claims, wherein the middle portion (42) comprises a bead adapted to be secured to a hog ring (60a) or a clip.
